# FASCICULE DE BREVET EUROPEEN

(11) **EP 2 540 615 B1**
(45) Date de publication et mention de la délivrance du brevet: **22.10.2014**
(21) Numéro de dépôt: 12173507.0
(22) Date de dépôt: 26.06.2012
(51) Int. Cl.: B64C 1/06

(54) **Dispositif et procédé d'assemblage de deux tronçons de fuselage d'aéronef**
Vorrichtung und Verfahren zum Zusammenbau von zwei Rumpfabschnitten eines Luftfahrzeugs
Device and method for assembling two aircraft fuselage sections

(30) Priorité: 27.06.2011 FR 1155696
(43) Date de publication de la demande: 02.01.2013
(73) Titulaire: Airbus Operations (Société par actions simplifiée), 31060 Toulouse (FR)
(72) Inventeur: Cacciaguerra, Bruno, 13100 Aix-en-Provence (FR); Depeige, Alain, 31170 Tournefeuille (FR); Lacombe, Jean-Claude, 31700 Blagnac (FR); Cazeneuve, Hélène, 31470 Fontenilles (FR); Castanet, Marc-Antoine, 44350 Guerande (FR)
(74) Mandataire: Augarde, Eric

(56) Documents cités:
- FR-A1- 2 906 008
- GB-A- 524 721

## Description

### DOMAINE TECHNIQUE

La présente invention se rapporte à l'assemblage des différents tronçons qui composent les fuselages des aéronefs, en particulier des avions, et qui présentent une structure du type comprenant une peau et des éléments structuraux rapportés sur la peau pour lui conférer sa rigidité, ces éléments comportant typiquement des raidisseurs longitudinaux, également dénommés lisses, s'étendant sensiblement dans des plans parallèles à l'axe du fuselage, et des cadres circonférentiels, qui s'étendent globalement selon un plan transversal, c'est-à-dire orthogonal à l'axe du fuselage, tout autour de cet axe.

L'invention concerne en particulier les fuselages dans lesquels les raidisseurs longitudinaux sont interrompus au niveau des jonctions entre tronçons du fuselage et requièrent d'être éclissés pour permettre la transmission des efforts structuraux d'un tronçon de fuselage à l'autre.

Un dispositif et un procédé d'assemblage de deux tronçons de fuselage d'aéronef est connu de FR-2906008, qui est regardé comme l'art antérieur le plus proche.

### ÉTAT DE LA TECHNIQUE ANTÉRIEURE

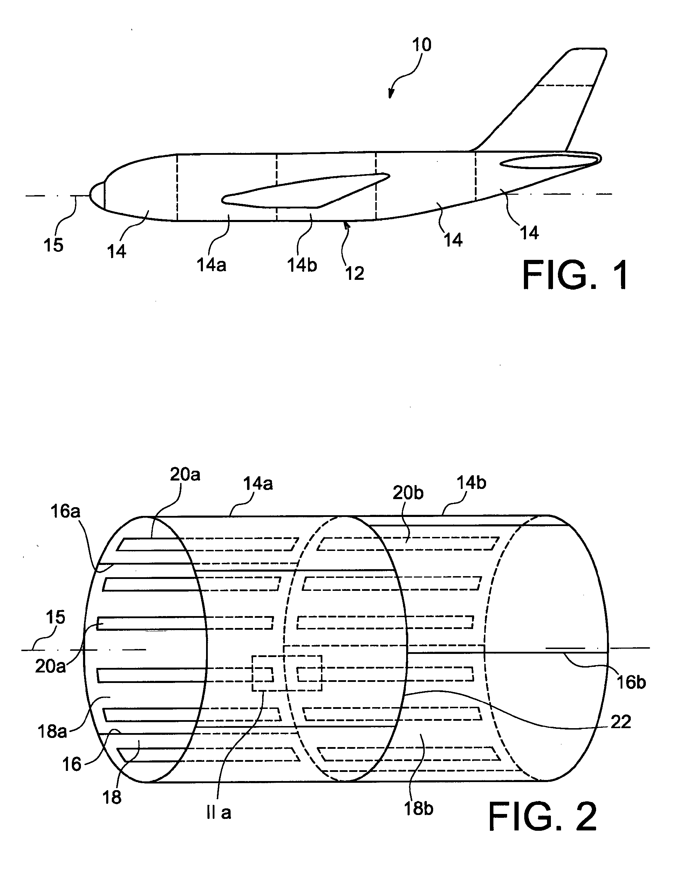

La figure 1 illustre schématiquement un exemple typique d'avion 10 dont le fuselage 12 est composé de plusieurs tronçons 14, 14a, 14b montés bout-à-bout longitudinalement et formés chacun de plusieurs panneaux montés bout-à-bout circonférentiellement.

Dans la description qui suit, les directions longitudinale, transversale et radiale sont définies par référence à l'axe 15 du fuselage 12 de l'avion.

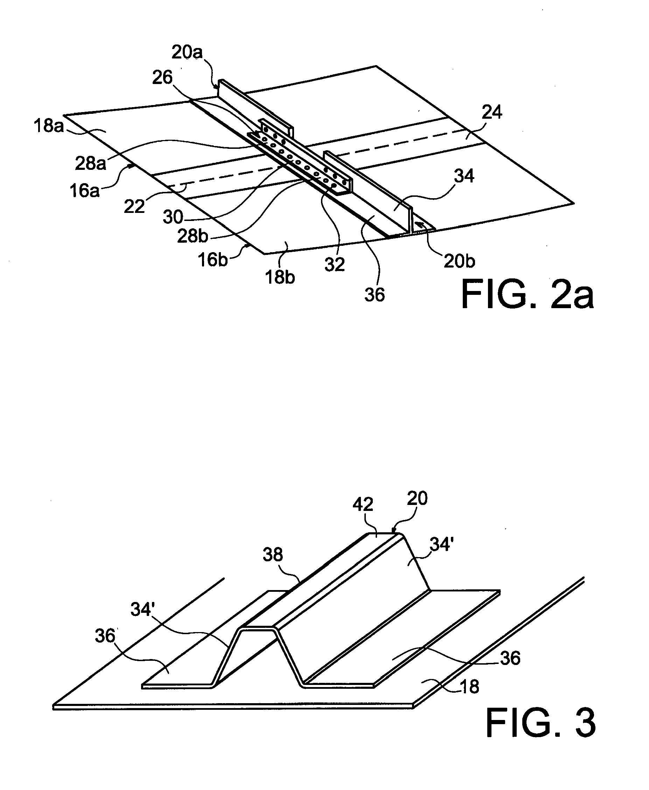

Comme le montre la figure 2 qui illustre deux tronçons de fuselage adjacents 14a, 14b, les panneaux 16a, 16b de ces tronçons comprennent chacun une peau 18a, 18b ainsi que plusieurs raidisseurs longitudinaux 20a, 20b qui s'interrompent à proximité de la jonction 22 entre ces deux tronçons de fuselage.

La figure 2a représente à plus grande échelle le détail IIa de la figure 2, et illustre ainsi la zone de jonction entre deux panneaux adjacents 16a et 16b respectifs des deux tronçons de fuselage adjacents 14a et 14b.

Cette figure 2a montre en particulier deux raidisseurs longitudinaux 20a et 20b respectifs de ces tronçons de fuselage, qui sont disposés l'un dans l'alignement de l'autre, ainsi qu'une virole circonférentielle 24 reliant directement les peaux 18a et 18b respectives des tronçons de fuselage et participant ainsi à la transmission des efforts entre ces peaux, et une éclisse 26 présentant une extrémité 28a fixée sur le raidisseur 20a du premier panneau 16a et une extrémité opposée 28b fixée sur le raidisseur 20b du second panneau 16b. Comme cela apparaît sur la figure 2a, l'éclisse 26 comporte en outre une partie médiane 30 fixée sur la virole 24 précitée. La fixation de l'éclisse 26 sur les raidisseurs 20a, 20b et sur la virole 24 est par exemple assurée par des boulons 32 d'un type couramment utilisé dans les fuselages d'aéronef.

Dans l'exemple représenté, les raidisseurs longitudinaux 20a et 20b comportent chacun une paroi médiane 34, couramment appelée âme, qui s'étend selon la direction radiale, et une semelle 36 qui s'étend de part et d' autre de l'âme 34 tangentiellement à la peau 18a, 18b du panneau 16a, 16b correspondant et qui est appliquée contre cette peau 18a, 18b. Ces raidisseurs présentent ainsi une section en T.

Il est à noter qu'il est parfois souhaitable que les éclisses 26 soient fixées non seulement sur la semelle 36 mais également sur l'âme 34 de chacun des raidisseurs 20a, 20b, comme dans l'exemple illustré par la figure 2a.

D'une manière générale, la fixation des éclisses sur les raidisseurs est habituellement réalisée par boulonnage ou par d'autres techniques conventionnelles.

Lors de leur assemblage, les deux tronçons de fuselage 14a et 14b sont positionnés bout-à-bout, de sorte que la virole 24, dont une partie a été préalablement fixée sur un premier des tronçons 14a, voit son autre partie emmanchée dans l'autre tronçon 14b, et de sorte que les raidisseurs longitudinaux 20a du premier tronçon soient sensiblement alignés avec ceux 20b du second tronçon.

Ensuite, une éclisse 26 est fixée sur chaque couple de raidisseurs 20a, 20b alignés de manière à raccorder les deux extrémités en vis-à-vis de ces derniers.

Toutefois, les tolérances de fabrication des différents éléments et les jeux de montage ne permettent pas un alignement parfait des raidisseurs longitudinaux des tronçons de fuselage. Aussi, le montage des éclisses sur ces raidisseurs requiert dans la majorité des cas des déformations de ces éclisses afin de les faire coïncider avec les raidisseurs correspondants. Ces déformations sont difficiles à mettre en oeuvre, et sont susceptibles de dégrader les propriétés mécaniques des éclisses concernées.

De plus, la fixation par boulonnage des éclisses sur les raidisseurs longitudinaux requiert un grand nombre d'opérations de serrage au cours de la phase finale d'assemblage des tronçons de fuselage, ce qui présente un coût considérable.

En outre, les fuselages en matériaux composites, de plus en plus répandus de nos jours, comportent avantageusement des raidisseurs longitudinaux présentant en section une forme en oméga. Les raidisseurs de ce type, dont un exemple est illustré sur la figure 3, comportent un corps médian 38 de raidisseur raccordé de chaque côté à deux semelles 36 de raidisseur. Dans l'exemple particulier représenté, le corps de raidisseur 38 comporte deux flancs latéraux 34', couramment appelés âmes, raccordés respectivement aux deux semelles 36 par leur base et raccordés entre eux par une paroi longitudinale 42 s'étendant de manière sensiblement parallèle aux semelles 36, et couramment dénommée tête de raidisseur.

Or, les difficultés d'alignement exposées ci-dessus se révèlent particulièrement marquées dans le cas des raidisseurs en oméga.

### EXPOSÉ DE L'INVENTION

L'invention a notamment pour but d'apporter une solution simple, économique et efficace à ces problèmes, permettant d'éviter au moins en partie les inconvénients précités.

L'invention propose à cet effet un dispositif d'assemblage de deux tronçons de fuselage d'aéronef comprenant chacun une peau ainsi que des raidisseurs longitudinaux apposés sur cette peau, le dispositif comprenant au moins une éclisse destinée à l'éclissage de deux raidisseurs longitudinaux sensiblement alignés l'un par rapport à l'autre et appartenant respectivement auxdits tronçons de fuselage.

Selon l'invention, ladite éclisse comprend deux pièces d'éclisse comportant chacune au moins une semelle longitudinale destinée à être fixée sur un raidisseur correspondant et une tête d'appui transversale, et ladite éclisse comprend en outre au moins un organe de liaison démontable apte à serrer mutuellement les têtes d'appui desdites pièces d'éclisse pour permettre une transmission d'efforts longitudinaux en traction et en compression entre ces pièces d'éclisse.

Le dispositif d'assemblage précité permet de faciliter l'éclissage des raidisseurs longitudinaux, ou lisses, des tronçons de fuselage, en autorisant un ajustement de l'alignement des deux pièces d'éclisse de chaque éclisse, avant serrage mutuel de celles-ci par chaque organe de liaison démontable de l'éclisse.

Au moyen de leur tête d'appui respective, les deux pièces d'éclisse permettent non seulement la transmission d'efforts longitudinaux de traction mais aussi la transmission d'efforts longitudinaux de compression. L'ensemble des efforts longitudinaux peut ainsi transiter par ladite éclisse. Par efforts de traction, il faut comprendre les efforts résultant d'une sollicitation de l'une au moins des deux pièces d'éclisse dans une direction opposée à l'autre pièce d'éclisse, tandis que par efforts de compression, il faut comprendre les efforts résultant d'une sollicitation de l'une au moins des deux pièces d'éclisse en direction de l'autre pièce d'éclisse.

De plus, les pièces d'éclisse peuvent être fixées ou préfixées sur les tronçons de fuselage correspondants avant la phase finale d'assemblage de ceux-ci, ce qui permet une réduction du nombre d'opérations nécessaires au cours de cette phase finale d'assemblage des tronçons de fuselage, comme cela apparaîtra plus clairement dans ce qui suit.

Il est à noter que chaque organe de liaison démontable de chaque éclisse est de préférence constitué d'un boulon, par exemple d'un type couramment utilisé dans les fuselages des aéronefs ou plus généralement en aéronautique, mais cet organe de liaison peut être d'un autre type lorsque cela présente un intérêt.

La tête d'appui de chaque pièce d'éclisse de chaque éclisse forme de préférence une extrémité longitudinale de la pièce d'éclisse.

Une telle configuration permet une transmission des efforts longitudinaux de compression d'une manière simple et efficace.

En variante, la tête d'appui de chaque pièce d'éclisse de chaque éclisse peut s'étendre à distance des extrémités longitudinales de la pièce d'éclisse. Dans ce cas, l'organe de liaison démontable de l'éclisse comprend de préférence des moyens d'application, sur chaque pièce d'éclisse, d'une force longitudinale orientée dans une direction opposée à l'autre pièce d'éclisse.

Les pièces d'éclisse de chaque éclisse sont de préférence réalisées en un métal, et peuvent dans ce cas être également dénommées « ferrures ».

Par ailleurs, chaque pièce d'éclisse comprend de préférence une âme, c'est-à-dire une paroi s'étendant selon un plan incliné ou orthogonal à chaque semelle de la pièce d'éclisse. Cette âme permet de renforcer la rigidité de la pièce d'éclisse.

L'invention concerne également un ensemble comprenant deux tronçons de fuselage d'aéronef assemblés bout-à-bout longitudinalement et dont chacun comprend une peau ainsi que des raidisseurs longitudinaux fixés sur cette peau et répartis autour d'un axe longitudinal du tronçon, lesdits raidisseurs longitudinaux étant agencés de sorte que chaque raidisseur longitudinal de l'un des tronçons soit sensiblement aligné avec un raidisseur longitudinal correspondant de l'autre tronçon, cet ensemble comprenant en outre au moins un dispositif d'assemblage du type décrit ci-dessus, dont les têtes d'appui transversales respectives des pièces d'éclisse de chaque éclisse sont serrées l'une à l'autre par chaque organe de liaison démontable de l'éclisse et dont les semelles longitudinales respectives desdites pièces d'éclisse de chaque éclisse sont fixées respectivement sur deux raidisseurs longitudinaux correspondants sensiblement alignés l'un avec l'autre et faisant respectivement partie des tronçons de fuselage précités.

Chaque tronçon de fuselage de l'ensemble précité peut être formé de plusieurs panneaux montés bout-à-bout circonférentiellement et comprenant chacun une partie de la peau et certains des raidisseurs de ce tronçon de fuselage.

En variante, chaque tronçon de fuselage peut bien entendu être réalisé sous la forme d'un unique panneau annulaire sans sortir du cadre de l'invention.

De plus, les tronçons de fuselage comprennent avantageusement des éléments, tels que leurs peaux, réalisés en un matériau composite.

Préférentiellement, au moins un élément d'un cadre circonférentiel est interposé entre les têtes d'appui transversales respectives desdites pièces d'éclisse de chaque éclisse dudit dispositif d'assemblage.

Cet élément du cadre précité est ainsi serré entre les deux têtes d'appui respectives des pièces d'éclisse de chaque éclisse au moyen de chaque organe de liaison de l'éclisse.

De plus, cet élément du cadre est de préférence traversé par chaque organe de liaison de chaque éclisse.

Le cadre précité peut être du type intégral, c'est-à-dire comprenant un pied et une âme réalisés d'un seul tenant, auquel cas l'élément interposé entre les pièces d'éclisse est de préférence l'âme de ce cadre.

Un tel cadre intégral est par exemple du type à section en T, c'est-à-dire que le pied du cadre prend la forme d'une semelle s'étendant de part et d'autre de l'âme du cadre, typiquement d'une manière symétrique par rapport à l'âme.

En variante, le cadre peut être d'un type comprenant des éléments de liaison indépendants, parfois dénommés « *clips* », assurant la liaison de l'âme du cadre à la peau de l'un au moins des tronçons de fuselage, auquel cas ce sont ces éléments de liaison ou *clips* qui sont de préférence interposés entre les pièces d'éclisse de chaque éclisse.

Dans un mode de réalisation préféré de l'invention, l'élément de cadre précité comporte un pied interposé entre une partie au moins de chaque semelle de l'une au moins desdites pièces d'éclisse de chaque éclisse et la peau du tronçon de fuselage correspondant.

Le pied précité du cadre présente avantageusement des rainures longitudinales dans lesquelles sont logées des extrémités respectives de semelles de raidisseurs longitudinaux interposées entre le pied du cadre et la peau du tronçon de fuselage.

Par ailleurs, chaque semelle de chaque pièce d'éclisse de chaque éclisse comprend avantageusement un évidement délimitant un espace de réception du pied de cadre précité.

D'une manière générale, l'ensemble de tronçons de fuselage peut en outre comporter une virole circonférentielle fixée sur les peaux respectives desdits tronçons de fuselage, et sur laquelle est fixée une partie de chaque semelle de chaque pièce d'éclisse de chaque éclisse du dispositif d'assemblage précité.

Une telle virole permet la transmission d'efforts directement de la peau de l'un des tronçons de fuselage à celle de l'autre tronçon de fuselage, d'une manière connue en soi.

Lorsque l'ensemble de tronçons de fuselage comporte un cadre du type intégral à section en T tel que décrit ci-dessus, le pied du cadre peut être fixé sur les peaux respectives des tronçons de fuselage de manière à remplir la fonction de virole, et rendre ainsi superflu l'usage d'une telle virole.

D'une manière générale, chaque semelle longitudinale de chaque pièce d'éclisse est de préférence, au moins en partie, fixée sur une semelle d'au moins un raidisseur longitudinal correspondant.

De plus, l'âme de chacune des pièces d'éclisse est avantageusement fixée sur une âme d'un raidisseur longitudinal correspondant.

En variante, l'âme de chacune des pièces d'éclisse peut être libre, c'est-à-dire ne pas être fixée sur le raidisseur correspondant.

Par ailleurs, chaque pièce d'éclisse de chaque éclisse comprend de préférence une unique semelle qui recouvre deux semelles respectives contigües de deux raidisseurs circonférentiellement consécutifs du tronçon de fuselage correspondant.

En variante, chacun desdits raidisseurs comportant deux semelles écartées circonférentiellement l'une de l'autre et raccordées par un corps du raidisseur, chaque pièce d'éclisse de chaque éclisse peut comporter deux semelles respectivement fixées sur lesdites deux semelles d'un raidisseur correspondant et raccordées l'une à l'autre par ladite tête d'appui transversale de la pièce d'éclisse.

D'une manière générale, chacun desdits raidisseurs longitudinaux présente de préférence, en section transversale, une structure en oméga.

L'utilisation de raidisseurs de ce type est particulièrement avantageuse lorsque les peaux des tronçons de fuselage sont réalisées en matériau composite.

Dans ce cas, les têtes de chaque raidisseur longitudinal peuvent avantageusement présenter dans chacun de leurs bords d'extrémité une échancrure ouverte dans la direction longitudinale.

Une telle échancrure permet le cas échéant de ménager un accès aisé aux moyens de fixation des âmes de chaque raidisseur aux âmes respectives des pièces d'éclisse correspondantes, et donc de faciliter l'installation, l'inspection et la réparation éventuelle de ces moyens de fixation.

En variante, chacun desdits raidisseurs longitudinaux peut présenter, en section transversale, une structure en T, c'est-à-dire comportant une âme s'étendant radialement et une semelle s'étendant tangentiellement, de part et d'autre de l'âme.

Dans ce cas, deux pièces d'éclisses peuvent être fixées de part et d'autre de l'âme de chacun desdits raidisseurs longitudinaux, sur la semelle du raidisseur et, éventuellement, également sur l'âme de ce raidisseur.

Les deux pièces d'éclisses précitées peuvent en outre comprendre des parties d'extrémité respectives en surépaisseur appliquées l'une contre l'autre, et fixées l'une à l'autre, par exemple par des boulons ou des rivets.

L'invention concerne également un fuselage d'aéronef comprenant au moins un ensemble de tronçons de fuselage du type décrit ci-dessus.

Elle concerne encore un aéronef comprenant un fuselage du type décrit ci-dessus.

L'invention concerne enfin un procédé d'assemblage de deux tronçons de fuselage d'aéronef, dont chacun comprend une peau ainsi que des raidisseurs longitudinaux fixés sur ladite peau et répartis autour d'un axe longitudinal du tronçon, au moyen d'au moins un dispositif d'assemblage du type décrit ci-dessus, en particulier pour obtenir un ensemble de tronçons de fuselage du type décrit ci-dessus, ce procédé comprenant au moins des étapes de :
- positionnement bout-à-bout, selon la direction longitudinale, des peaux respectives desdits tronçons de fuselage ;
- fixation d'une première pièce d'éclisse de chaque éclisse dudit dispositif d'assemblage sur un raidisseur correspondant d'un premier desdits tronçons de fuselage ;
- fixation de la seconde pièce d'éclisse de chaque éclisse dudit dispositif d'assemblage sur un raidisseur correspondant du second desdits tronçons de fuselage ;
- et, postérieurement aux trois étapes ci-dessus, serrage mutuel des têtes d'appui transversales desdites pièces d'éclisse de chaque éclisse dudit dispositif d'assemblage au moyen de chaque organe de liaison démontable de l'éclisse de manière à permettre une transmission d'efforts longitudinaux en traction et en compression entre lesdites pièces d'éclisse.

Les trois premières étapes de positionnement et de serrage précitées peuvent être mises en oeuvre dans l'ordre indiqué ci-dessus ou, en variante, dans un ordre différent.

Dans tous les cas, la configuration de chaque éclisse en deux pièces d'éclisses mobiles indépendamment l'une de l'autre permet un ajustement de l'alignement de ces pièces d'éclisse, ce qui constitue un avantage considérable lors de l'assemblage des deux tronçons de fuselage. Cela permet en particulier d'éviter de devoir déformer les éclisses pour compenser des défauts d'alignement éventuels et/ou de devoir poser des cales d'ajustement sur les âmes des raidisseurs.

Dans un mode de réalisation préféré de l'invention, l'étape de fixation précitée de la première pièce d'éclisse de chaque éclisse est mise en oeuvre avant ladite étape de positionnement bout-à-bout des peaux des tronçons de fuselage.

De cette manière, le nombre d'opérations de fixation au cours de la phase finale d'assemblage des tronçons de fuselage, c'est-à-dire postérieurement à l'étape de positionnement bout-à-bout des peaux de ces tronçons de fuselage, peut être considérablement réduit.

En outre, l'étape de fixation de la seconde pièce d'éclisse de chaque éclisse peut également être mise en oeuvre avant l'étape de positionnement bout-à-bout des peaux des tronçons de fuselage.

Dans ce cas, cette étape de fixation de la seconde pièce d'éclisse est avantageusement mise en oeuvre parallèlement à l'étape précitée de fixation de la première pièce d'éclisse de chaque éclisse, c'est-à-dire selon un mode opératoire en temps masqué.

La mise en oeuvre de l'étape de fixation de la seconde pièce d'éclisse de chaque éclisse avant l'étape de positionnement bout-à-bout des tronçons de fuselage permet de réduire davantage le nombre d'opérations de fixation au cours de la phase finale d'assemblage des tronçons de fuselage, lorsque les besoins d'ajustement de l'alignement des pièces d'éclisse sont réduits.

En variante, l'étape de fixation de la seconde pièce d'éclisse de chaque éclisse peut être mise en oeuvre après l'étape de positionnement bout-à-bout des peaux des tronçons de fuselage.

Cela est avantageux pour conserver de bonnes possibilités d'ajustement de l'alignement des pièces d'éclisses de chaque éclisse, comme expliqué ci-dessus.

Dans ce cas, le procédé comprend en outre avantageusement une étape de fixation provisoire de la seconde pièce d'éclisse de chaque éclisse du dispositif d'assemblage sur le raidisseur correspondant du second desdits tronçons de fuselage, mise en oeuvre avant ladite étape de positionnement bout-à-bout des peaux des tronçons de fuselage.

Par fixation provisoire, il faut comprendre un serrage incomplet de moyens de fixation, tels que des boulons conventionnels, qui seront utilisés ultérieurement pour la fixation définitive des secondes pièces d'éclisse précitées, ou encore une fixation temporaire par des moyens de fixation provisoires, tels que des épingles, qui seront retirés ultérieurement en vue de la fixation définitive par d'autres moyens de fixation, qui peuvent là encore être constitués de boulons conventionnels.

D'une manière générale, il est à noter que le procédé d'assemblage peut inclure le montage d'un cadre circonférentiel et/ou d'une virole de liaison des peaux des tronçons de fuselage.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle de côté d'un avion d'un type connu ;
- la figure 2, déjà décrite, est une vue schématique partielle en perspective de deux tronçons adjacents du fuselage de l'avion de la figure 1 ;
- la figure 2a, déjà décrite, est une vue à plus grande échelle du détail IIa de la figure 2 ;
- la figure 3, déjà décrite, est une vue schématique partielle en perspective d'un raidisseur longitudinal à section en oméga ;
- la figure 4 est une vue schématique partielle en perspective d'un fuselage d'avion selon un premier mode de réalisation préféré de l'invention, illustrant plus particulièrement la zone de jonction de deux tronçons adjacents de ce fuselage ;
- la figure 5 est une vue schématique partielle, selon la direction longitudinale, des tronçons de fuselage de la figure 4 ;
- la figure 6 est une vue schématique partielle en coupe transversale d'un fuselage d'avion selon un deuxième mode de réalisation préféré de l'invention, illustrant plus particulièrement la zone de jonction de deux tronçons adjacents de ce fuselage ;
- la figure 7 est une vue schématique partielle en coupe axiale du fuselage de la figure 6 ;
- la figure 8 est une vue schématique partielle en perspective d'un raidisseur longitudinal appartenant au fuselage de la figure 6 ;
- la figure 9 est une vue schématique partielle en perspective d'un cadre circonférentiel intégral à section en T appartenant au fuselage de la figure 6 ;
- la figure 10 est une vue schématique partielle, selon la direction longitudinale, d'un fuselage d'avion selon un troisième mode de réalisation préféré de l'invention, illustrant en particulier un raidisseur longitudinal de ce fuselage et une pièce d'éclisse associée ;
- la figure 11 est une vue schématique partielle en perspective de la pièce d'éclisse de la figure 10 ;
- la figure 12 est une vue schématique partielle en coupe axiale du fuselage de la figure 10, illustrant plus particulièrement la zone de jonction de deux tronçons adjacents de ce fuselage ;
- la figure 13 est une vue schématique partielle, selon la direction radiale et depuis l'intérieur, d'un fuselage d'avion selon un quatrième mode de réalisation préféré de l'invention, cette vue illustrant plus particulièrement la zone de jonction de deux tronçons adjacents de ce fuselage ;
- la figure 14 est une vue schématique partielle en section transversale selon le plan A-A de la figure 13, du fuselage de cette figure 13 ;
- la figure 15 est une vue schématique partielle en coupe transversale selon le plan B-B de la figure 13, du fuselage de cette figure 13.

Dans l'ensemble de ces figures, des références identiques peuvent désigner des éléments identiques ou analogues.

### EXPOSÉ DÉTAILLÉ DE MODES DE RÉALISATION PREFERES

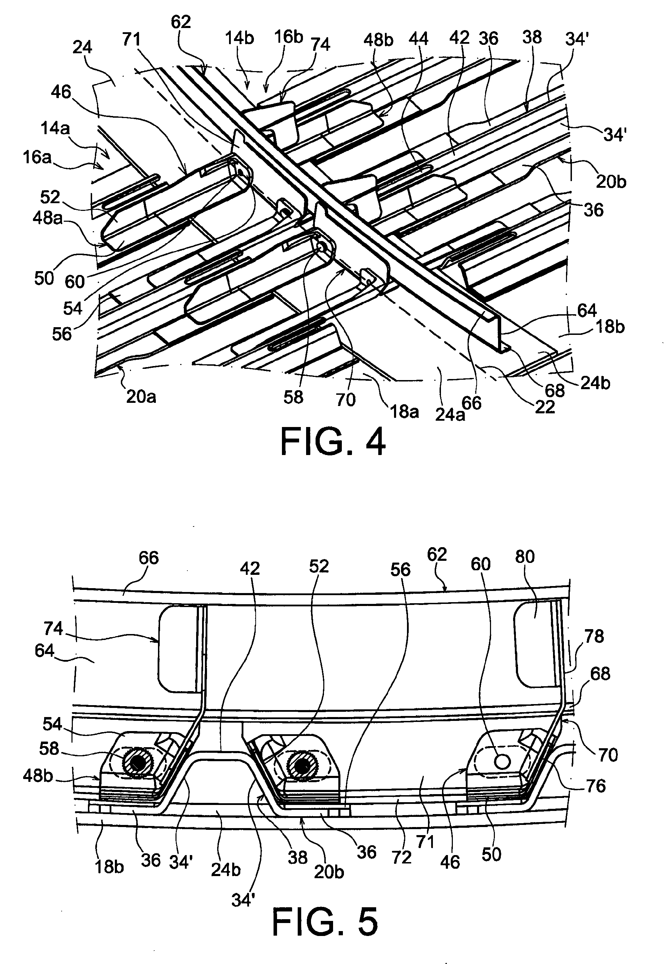

Les figures 4 et 5 illustrent la zone de jonction de deux tronçons adjacents 14a et 14b d'un fuselage d'aéronef selon un premier mode de réalisation préféré de l'invention.

Chacun des tronçons 14a et 14b de ce fuselage est formé de plusieurs panneaux 16a, 16b montés bout-à-bout circonférentiellement et comportant chacun une peau 18a, 18b, ainsi que des raidisseurs longitudinaux ou lisses 20a, 20b.

Comme le montre la figure 4, les raidisseurs longitudinaux 20a, 20b sont du type en oméga, et comportent chacun un corps médian de raidisseur 38 comprenant deux flanc latéraux ou âmes 34' dont les extrémités radialement externes respectives sont raccordées respectivement à deux semelles 36 de raidisseur et dont les extrémités radialement internes respectives sont raccordées entre elles par une paroi longitudinale formant tête de raidisseur 42, dont les extrémités longitudinales présentent chacune une échancrure 44.

Par ailleurs, les peaux 18a, 18b des panneaux 16a, 16b sont reliées structurellement par une virole 24, d' une manière connue en soi. Il est à noter que l'extrémité longitudinale des semelles 36 des raidisseurs 20a, 20b vient sensiblement en butée contre le bord correspondant de la virole 24.

Comme cela apparaît sur la figure 4, chaque couple de raidisseurs mutuellement alignés appartenant respectivement aux tronçons de fuselage 14a et 14b est associé à une éclisse 46 comprenant deux pièces d'éclisse indépendantes 48a et 48b, également dénommées ferrures.

Chacune de ces pièces d'éclisse 48a, 48b comporte une semelle 50 s'étendant longitudinalement, une âme 52 qui s'étend longitudinalement selon un plan incliné par rapport à la semelle 50 et qui est raccordée à cette semelle 50, et une tête d'appui 54 s'étendant transversalement au niveau d'une extrémité longitudinale de la pièce d'éclisse.

La semelle 50 et l'âme 52 de chaque pièce d'éclisse sont conformées pour pouvoir épouser une semelle 36 d'un raidisseur 20a, 20b ainsi que l'âme 34' de raidisseur qui lui est raccordée, et permettre ainsi la fixation d'une partie de la semelle 50 et de l'âme 52 de la pièce d'éclisse respectivement sur la semelle 36 et sur l'âme 34' de raidisseur correspondantes, par exemple par des boulons (non représentés sur les figures 4 et 5). La semelle 50 et l'âme 52 présentent ainsi sensiblement la même inclinaison relative que l'inclinaison entre l'âme 34' et la semelle 36 de raidisseur correspondantes.

Chaque pièce d'éclisse 48a, 48b est appliquée en partie sur le raidisseur 20a, 20b correspondant, et en partie sur la virole 24. Des cales de rehaussement 56 sont interposées de manière facultative entre chaque pièce d'éclisse 48a, 48b et la semelle de raidisseur 36 correspondante de manière à compenser la différence d'épaisseur entre cette semelle de raidisseur 36 et la virole 24. Ces cales sont par exemple réalisées en un matériau composite.

De plus, chaque éclisse 46 comporte un boulon de liaison 58 monté dans un orifice traversant 60, d'axe longitudinal, formé dans la tête d'appui 54 de chaque pièce d'éclisse 48a, 48b de l'éclisse de manière à assurer un serrage mutuel des têtes d'appui 54 respectives de ces pièces d'éclisse 48a, 48b. Certaines éclisses 46 sont représentées dépourvues de boulons 58 sur les figures 4 et 5 afin de laisser apparaître les orifices 60 de ces éclisses.

Il est à noter que l'ensemble des éclisses 46 forme un dispositif d'assemblage des deux tronçons de fuselage 14a et 14b, selon la terminologie de la présente invention.

Le fuselage comporte en outre un cadre circonférentiel 62 prenant la forme d'une âme 64 s'étendant sensiblement selon un plan transversal et présentant des bords d'extrémité 66 et 68 recourbés respectivement en direction de l'avant et de l'arrière du fuselage.

Le cadre 62 est supporté par des éléments de liaison 70, également dénommés *« clips »*, prenant chacun la forme d'une plaquette transversale 71 fixée sur un côté de l'âme 64 du cadre 62, par exemple par boulonnage, et comportant un pied 72 (figure 5) recourbé dans la direction axiale et fixé sur la virole 24 et sur la peau 18b de l'un 14b des tronçons de fuselage, par exemple par des boulons (non visibles sur les figures 4 et 5).

Il est à noter que chaque pièce d'éclisse 48b fixée sur le tronçon de fuselage 14b précité comporte dans sa semelle 50 un évidement (non visible sur les figures 4 et 5) qui est formé sur la face de la semelle opposée à l'âme 52 de cette pièce, c'est-à-dire sur la face en regard de la virole 24, et qui s'étend depuis la tête d'appui 54 de celle-ci. Cet évidement délimite un espace de réception du pied 72 du *clip* 70 correspondant entre la virole 24 et la semelle 50 de la pièce d'éclisse 48b. A titre d'exemple, cet évidement peut définir une marche sur la face précitée de la semelle 50.

De plus, le cadre 62 est soutenu par des stabilisateurs de cadre 74 fixés sur l'autre côté de l' âme 64 du cadre et destinés à limiter les risques de déversement de ce cadre, d'une manière connue en soi. Chaque stabilisateur de cadre 74 prend la forme d'une lamelle (figure 5) s'étendant parallèlement à l'axe du fuselage et comprenant une première partie 76 s'étendant parallèlement aux âmes 52 et 34' précitées, ainsi qu'une seconde partie 78 s'étendant selon un plan passant par l'axe du fuselage et pourvue d'une partie recourbée en équerre formant tête d'appui 80.

La première partie 76 de chaque stabilisateur de cadre 74 est fixée conjointement sur l'âme 52 d'une pièce d'éclisse 48b et sur l'âme 34' de raidisseur correspondante, tandis que la tête d'appui 80 du stabilisateur de cadre 74 est fixée sur l'âme 64 du cadre 62.

Comme le montre la figure 4, une partie de chaque *clip* 70 est interposée entre les têtes d'appui 54 respectives des pièces d'éclisse 48a, 48b de deux éclisses 46 qui sont respectivement fixées sur deux côtés en vis-à-vis de deux couples consécutifs de raidisseurs longitudinaux 20a, 20b alignés. Chaque *clip* 70 comporte ainsi deux orifices qui sont respectivement traversés par les boulons de liaison 58 des deux éclisses 46 précitées, et qui permettent donc un serrage conjoint du *clip* 70 et des têtes d'appui 54 des pièces d'éclisses 48a, 48b de ces deux éclisses 46, au moyen des boulons de liaison 58.

D'une manière générale, des efforts longitudinaux de traction sont transmis par la tête d'appui 54 de l'une des pièces d'éclisse de chaque éclisse au boulon de liaison 58 correspondant, et de ce dernier à la tête d'appui 54 de l'autre pièce d'éclisse de l'éclisse, tandis que des efforts de compression sont transmis par l'appui de la tête d'appui 54 de l'une des pièces d'éclisse de chaque éclisse sur la tête d'appui 54 de l'autre pièce d'éclisse de l'éclisse, par l'intermédiaire du *clip* 70 correspondant.

L'assemblage des deux tronçons de fuselage 14a et 14b peut être mis en oeuvre selon le procédé suivant.

Au préalable, un nombre d'éclisses 46 égal au double du nombre de raidisseurs longitudinaux 20a, 20b de l'un ou l'autre des tronçons de fuselage 14a, 14b est mis à disposition.

Une première partie circonférentielle 24b de la virole 24 est fixée sur la peau 18b du panneau 16b d'un premier 14b des tronçons de fuselage, par exemple par boulonnage, de sorte qu'une seconde partie circonférentielle 24a de cette virole 24 s'étende librement au-delà de ce tronçon 14b.

Le cadre 62 est ensuite installé en fixant le pied 72 de chaque *clip* 70 sur la première partie 24b de la virole 24 d'une part, et en fixant la plaquette transversale 71 de chaque *clip* 70 sur l'âme 64 du cadre d'autre part.

Une première pièce d'éclisse 48b de chaque éclisse 46 est ensuite fixée, par exemple également par boulonnage, sur une semelle 36 et une âme 34' correspondantes d'un raidisseur 20b du premier tronçon de fuselage 14b et sur la première partie circonférentielle 24b de la virole 24 préalablement fixée sur ce premier tronçon de fuselage 14b, en veillant d'une part à l'insertion des pieds 72 des *clips* 70 dans l'évidement formé dans la semelle 50 de chaque pièce d'éclisse 48b, et d'autre part à l'alignement des orifices de chaque *clip* 70 et des orifices 60 respectifs des têtes d'appui 54 des pièces d'éclisse 48b.

Les stabilisateurs de cadre 74 sont ensuite fixés sur l' âme 64 du cadre 62 et sur les âmes 34' des raidisseurs 20b du premier tronçon de fuselage 14b.

En parallèle aux opérations décrites ci-dessus relatives au premier tronçon de fuselage 14b, une seconde pièce d'éclisse 48a de chaque éclisse 46 est préfixée sur une semelle 36 et une âme 34' correspondantes d'un raidisseur 20a du second tronçon de fuselage 14a. Par préfixation, il faut comprendre que chaque seconde pièce d'éclisse est fixée de manière provisoire au raidisseur 20a correspondant par des moyens de fixation, tels que des boulons, sans serrage complet de ces derniers, de manière à conserver une mobilité et un jeu entre la seconde pièce d'éclisse et le raidisseur. En variante, cette préfixation peut être opérée par des moyens de fixation provisoires tels que des épingles. En variante encore, cette étape de préfixation de chaque seconde pièce d'éclisse peut être omise.

D'une manière générale, il est à noter que l'échancrure 44 de la tête 42 de chaque raidisseur 20a, 20b permet un accès aisé à la face interne des âmes 34' du raidisseur et permet ainsi de faciliter les opérations décrites ci-dessus de serrage des boulons assurant la fixation des pièces d'éclisse 48a, 48b sur les âmes 34' des raidisseurs, mais aussi d'éventuelles opérations ultérieures d'inspection et de réparation.

Le procédé comprend ensuite l'assemblage proprement dit des tronçons de fuselage 14a et 14b. Il s'agit alors de positionner ces deux tronçons bout-à-bout en assurant un alignement entre les raidisseurs 20b du premier tronçon 14b et les raidisseurs 20a du second tronçon 14a, et en veillant à l'emmanchement de la seconde partie circonférentielle 24a de la virole 24 dans le second tronçon de fuselage 14a, entre la peau 18a de chaque panneau 16a de ce second tronçon de fuselage et les pièces d'éclisses 48a préfixées sur les raidisseurs 20a de ce second tronçon de fuselage 14a.

La seconde partie circonférentielle 24a de la virole 24 peut alors être fixée sur la peau 18a de chaque panneau 16a du second tronçon 14a, par exemple par boulonnage.

La seconde pièce d'éclisse 48a de chaque éclisse 46 préalablement préfixée peut, si nécessaire, être déplacée relativement au raidisseur 20a correspondant du second tronçon 14a de manière à obtenir un alignement satisfaisant de l'orifice 60 de la tête d'appui 54 de cette seconde pièce d'éclisse 48a avec l'orifice 60 correspondant de la première pièce d'éclisse 48b de cette éclisse 46 et de l'orifice correspondant du *clip* 70 interposé entre ces deux pièces d'éclisse 48a, 48b.

Les boulons de liaison 58 respectifs des éclisses 46 peuvent alors être montés dans les orifices 60 des têtes d'appui 54 respectives des deux pièces d'éclisse 48a, 48b de chaque éclisse 46 et dans les orifices correspondants des *clips* 70, de manière à serrer les deux pièces d'éclisse 48a, 48b précitées conjointement avec le *clip* 70 correspondant.

Dans le cas où l'opération de préfixation de la seconde pièce d'éclisse 48a de chaque éclisse 46 a été omise précédemment, les secondes pièces d'éclisses 48a sont successivement mises en place sur le raidisseur 20a correspondant du second tronçon de fuselage 14a et fixées respectivement aux premières pièces d'éclisses 48b associées au moyen des boulons de liaison 58, de la manière décrite ci-avant.

La fixation définitive de chaque pièce d'éclisse 48a sur le raidisseur 20a correspondant du second tronçon 14a et sur la seconde partie 24a de la virole 24 est opérée à ce stade.

Dans le cas où l'opération de préfixation de la seconde pièce d'éclisse 48a de chaque éclisse 46 a été conduite au préalable, et en fonction du type de préfixation, la fixation définitive précitée peut consister en un serrage complet de moyens de fixation partiellement serrés au préalable, ou en un remplacement de moyens de fixation provisoires, tels que des épingles, par des moyens de fixation définitifs, tels que des boulons. Dans le cas où l'opération de préfixation a été omise, il faut comprendre par fixation définitive une opération de serrage par de tels moyens de fixation définitifs.

Il apparaît clairement que le procédé décrit ci-dessus à titre d'exemple permet non seulement de faciliter le montage des éclisses 46 sur les raidisseurs longitudinaux 20a, 20b en offrant des possibilités d'ajustement de l'alignement entre les pièces d'éclisses 48a et 48b au cours de la phase finale d'assemblage des tronçons de fuselage 14a, 14b, mais ce procédé permet en outre une réduction du nombre d'opérations nécessaires postérieurement au raccordement des deux tronçons de fuselage, dans la mesure où une première pièce d'éclisse 48b de chaque éclisse 46 peut être définitivement fixée au préalable sur l'un des tronçons de fuselage 14b, et cela d'autant plus dans le cas où l'autre pièce d'éclisse 48a de chaque éclisse est partiellement fixée sur l'autre tronçon de fuselage 14a.

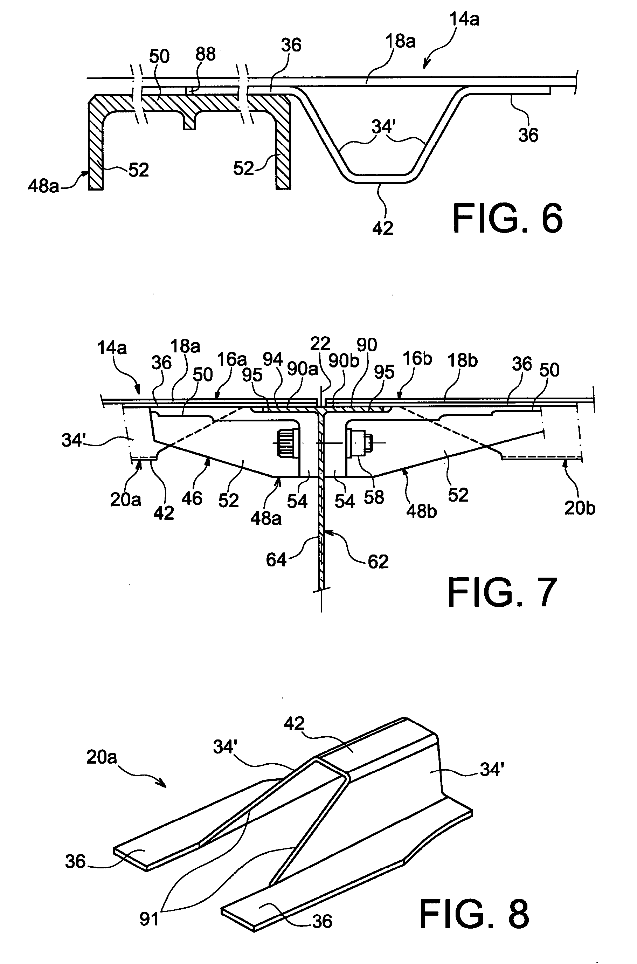

Les figures 6 à 9 illustrent un deuxième mode de réalisation préféré de l'invention, dans lequel les pièces d'éclisses 48a, 48b de chaque éclisse 46 présentent chacune une semelle 50 fixée sur et recouvrant les semelles 36 contigües appartenant respectivement à deux raidisseurs longitudinaux 20a, 20b consécutifs du tronçon de fuselage 14a, 14b correspondant (figure 6).

De plus, chaque pièce d'éclisse 48a, 48b présente deux âmes 52 formées respectivement aux deux extrémités circonférentielles opposées de la semelle 50 de la pièce d'éclisse, et s'étendant sensiblement selon un plan passant par l'axe du fuselage, c'est-à-dire selon une direction perpendiculaire à la semelle 50. Dans l'exemple illustré ici, ces âmes 52 sont libres, c'est-à-dire qu'elles ne sont pas fixées aux âmes de raidisseur 34' correspondantes.

En outre, sur chacun des tronçons de fuselage 14a, 14b, les deux semelles 36 contigües de chaque couple de raidisseurs 20a, 20b consécutifs s'étendent circonférentiellement de manière à laisser entre leurs extrémités un petit espace dans lequel est logé un joint d'étanchéité 88 (figure 6), par exemple réalisé en mastic conventionnel, qui assure un contact avec les deux semelles de raidisseur 36 précitées et avec la semelle 50 de la pièce d'éclisse 48a, 48b correspondante.

Par ailleurs, le cadre circonférentiel 62 est du type intégral à section en T, et comporte ainsi un pied de cadre 90 (figure 7) prenant la forme d'une semelle réalisée d'un seul tenant avec l'âme 64 de ce cadre et s'étendant longitudinalement de part et d'autre de cette âme 64. Ce pied de cadre 90 est fixé aux peaux 18a, 18b respectives des panneaux 16a, 16b des deux tronçons de fuselage 14a, 14b, par exemple par boulonnage, de manière à remplir la fonction de liaison structurale des peaux 18a, 18b qui était dévolue à la virole 24 dans le premier mode de réalisation décrit ci-dessus.

D'une manière connue en soi, chaque raidisseur longitudinal 20a, 20b (figure 8) présente deux semelles 36 s'étendant au-delà de la tête 42 du raidisseur dans la direction longitudinale. De plus, les âmes 34' de chaque raidisseur présentent à leurs extrémités longitudinales un bord 91 incliné par rapport à la direction perpendiculaire aux semelles 36 du raidisseur, de manière à optimiser la transmission d'efforts entre la tête 42 du raidisseur et les semelles 36 de ce dernier.

Comme le montre la figure 7, les semelles 36 de chaque raidisseur 20a, 20b s'étendent longitudinalement jusqu'au niveau de l'extrémité du tronçon de fuselage 14a, 14b correspondant.

De ce fait, le pied de cadre 90 est fixé conjointement sur les semelles 36 des raidisseurs 20a, 20b et sur les peaux 18a, 18b précitées.

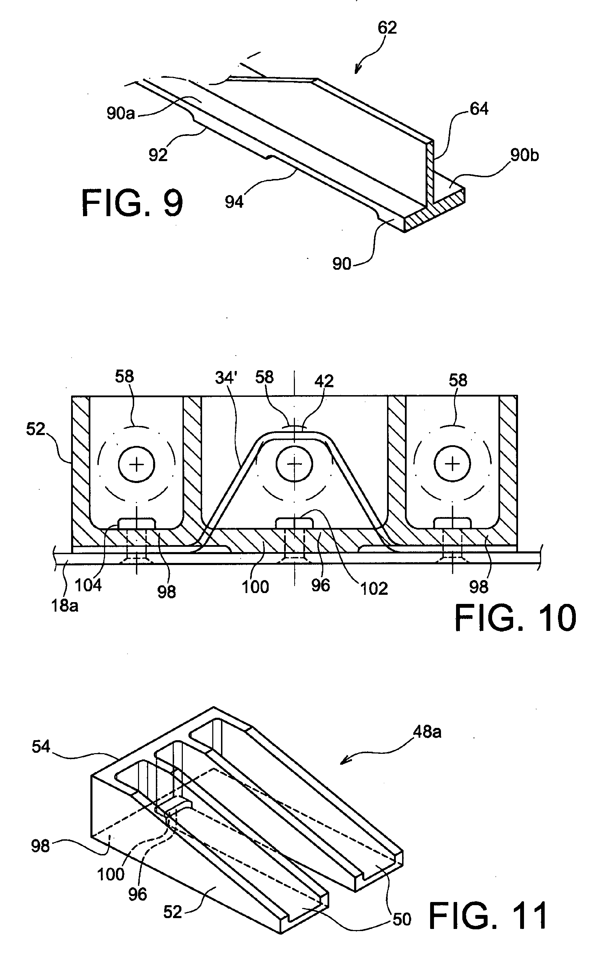

De plus, le pied de cadre 90 comporte, sur sa face 92 en regard des peaux 18a, 18b, des rainures 94 (figure 9) régulièrement réparties autour de l'axe du fuselage et dont chacune permet le passage de deux semelles 36 adjacentes appartenant respectivement à deux raidisseurs 20a, 20b consécutifs.

En outre, les deux pièces d'éclisse 48a, 48b de chaque éclisse 46 comportent un évidement 95 (figure 7) formé en regard de la peau 18a, 18b du panneau 16a, 16b du tronçon de fuselage 14a, 14b correspondant et s'étendant depuis la tête d'appui 54 de la pièce d'éclisse, pour délimiter un espace de réception du pied de cadre 90 entre chacune des pièces d'éclisse 48a, 48b de l'éclisse et la semelle 36 de raidisseur correspondante.

Il est à noter que, selon ce deuxième mode de réalisation, chaque éclisse 46 comprend par exemple deux ou trois boulons de liaison 58 (figure 7) assurant le serrage mutuel des têtes d'appui 54 respectives des deux pièces d'éclisse 48a, 48b de l'éclisse, lesquelles têtes d'appui 54 comportent donc chacune deux ou trois orifices traversants qui permettent le passage des vis de ces boulons de liaison 58.

De plus, dans ce deuxième mode de réalisation de l'invention, c'est l'âme 64 du cadre 62 qui est interposée entre les têtes d'appui 54 respectives des pièces d'éclisses 48a, 48b de chaque éclisse 46. Cette âme 64 du cadre 62 est donc percée d'orifices prévus pour le passage des boulons de liaison 58 des éclisses 46.

L'assemblage des deux tronçons de fuselage 14a et 14b peut être mis en oeuvre selon le procédé suivant.

Au préalable, un nombre d'éclisses 46 égal au nombre de raidisseurs longitudinaux 20a, 20b de l'un ou l'autre des tronçons de fuselage 14a, 14b est mis à disposition.

Un premier côté 90a du pied 90 du cadre 62 est fixé sur la peau 18a des panneaux 16a d'un premier 14a des tronçons de fuselage, par exemple par boulonnage, de sorte qu'un second côté 90b de ce pied de cadre 90 s'étende librement au-delà de ce tronçon 14a.

Une première pièce d'éclisse 48a de chaque éclisse 46 est ensuite fixée sur deux semelles de raidisseur 36 contigües du premier tronçon de fuselage 14a, le cas échéant après mise en place du joint d'étanchéité 88 entre ces deux semelles de raidisseur 36, et sur le premier côté 90a du pied de cadre 90, par exemple par boulonnage également.

En parallèle, une seconde pièce d'éclisse 48b de chaque éclisse 46 peut être préfixée sur deux semelles de raidisseur 36 contigües du second tronçon de fuselage 14b. Par préfixation, il faut comprendre là encore que chaque seconde pièce d'éclisse est fixée de manière provisoire aux semelles de raidisseur 36 correspondantes par des moyens de fixation, tels que des boulons, sans serrage complet de ces derniers, de manière à conserver une mobilité et un jeu entre la seconde pièce d'éclisse et les semelles de raidisseur. En variante, cette préfixation peut être opérée par des moyens de fixation provisoires tels que des épingles. Cette étape de préfixation peut également être omise.

Le procédé comprend ensuite l'assemblage proprement dit des tronçons de fuselage 14a et 14b. Il s'agit alors de positionner ces deux tronçons bout-à-bout en assurant un alignement entre les raidisseurs 20a du premier tronçon de fuselage 14a et les raidisseurs 20b du second tronçon 14b, et en veillant à l'emmanchement du second côté 90b du pied de cadre 90 dans le second tronçon de fuselage 14b, dans les espaces de réception définis entre les semelles de raidisseur 36 de ce second tronçon de fuselage et les pièces d'éclisses 48b préfixées sur ces semelles 36.

Le second côté 90b du pied de cadre 90 peut alors, le cas échéant, être fixé sur la peau 18b de chaque panneau 16b du second tronçon de fuselage 14b, par exemple par boulonnage.

La seconde pièce d'éclisse 48b de chaque éclisse 46 peut, si nécessaire, être déplacée relativement aux semelles de raidisseur 36 correspondantes du second tronçon de fuselage 14b de manière à obtenir un alignement satisfaisant des deux orifices traversants de la tête d'appui 54 de cette seconde pièce d'éclisse 48b avec les deux orifices correspondants de la première pièce d'éclisse 48a de cette éclisse 46 et des deux orifices correspondants de l' âme 64 du cadre 62 qui est interposée entre ces deux pièces d'éclisse 48a, 48b.

Les deux boulons de liaison 58 de chacune des éclisses 46 peuvent alors être montés dans les orifices des têtes d'appui 54 en passant au travers des orifices correspondants de l'âme 64 du cadre 62, de manière à serrer les deux pièces d'éclisse 48a, 48b de chaque éclisse 46 conjointement avec le cadre 62.

La fixation définitive de chaque pièce d'éclisse 48b sur le raidisseur 20b correspondant du second tronçon 14b et sur le second côté 90b du pied de cadre 90 peut également être opérée à ce stade. En fonction des étapes précédentes, cette fixation définitive peut consister en un serrage complet de moyens de fixation partiellement serrés au préalable, en un remplacement de moyens de fixation provisoires, tels que des épingles, par des moyens de fixation définitifs, tels que des boulons, ou lorsque l'étape de préfixation des secondes pièces d'éclisse 48b a été omise, en un serrage direct de tels moyens de fixation définitifs.

Les figures 10 à 12 illustrent un troisième mode de réalisation préféré de l'invention, dans lequel les pièces d'éclisses 48a, 48b de chaque éclisse 46 présentent chacune deux semelles latérales 50 qui sont respectivement fixées sur les deux semelles 36 d'un même raidisseur longitudinal 20a, 20b correspondant.

Plus précisément, chaque pièce d'éclisse 48a, 48b présente une tête d'appui 54, prenant la forme d'une plaque transversale ayant une étendue circonférentielle sensiblement égale à l'étendue circonférentielle d'un raidisseur longitudinal 20a, 20b, ainsi qu'un pied 96 formé à la base de la tête d'appui 54 et s'étendant de manière sensiblement orthogonale à cette dernière.

Le pied 96 présente deux parties latérales 98 qui se prolongent, dans la direction opposée à la tête d'appui 54, respectivement par les deux semelles latérales 50 précitées. Le pied 96 présente en outre une partie médiane 100 (figure 10) qui présente une surépaisseur s'étendant entre les semelles 36 du raidisseur 20a, 20b correspondant de manière à être en contact avec la peau de panneau 18a, 18b sur laquelle le raidisseur 20a, 20b précité est fixé.

Il est à noter que la partie médiane 100 du pied 96 est fixée sur la peau de panneau 18a, 18b par un boulon 102, à l'instar des semelles latérales 50 qui sont fixées conjointement à la peau 18a, 18b et aux semelles 36 du raidisseur 20a, 20b par des boulons (dont l'un 104 est visible sur la figure 10).

En outre, chaque pièce d'éclisse 48a, 48b présente quatre âmes 52 formées respectivement aux deux extrémités circonférentielles opposées de chacune des deux semelles 50 de la pièce d'éclisse, et s'étendant sensiblement selon un plan passant par l'axe du fuselage, c'est-à-dire un plan orthogonal aux semelles 50 et à la tête d'appui 54 de la pièce d'éclisse. Chacune de ces âmes 52 est raccordée à la tête d'appui 54 et présente, selon la direction perpendiculaire aux semelles 50, une étendue qui diminue en s'éloignant de la tête d'appui 54 (figure 11). Dans l'exemple illustré ici, toutes les âmes 52 sont libres, c'est-à-dire qu'elles ne sont pas fixées aux âmes de raidisseur 34' correspondantes (figure 10).

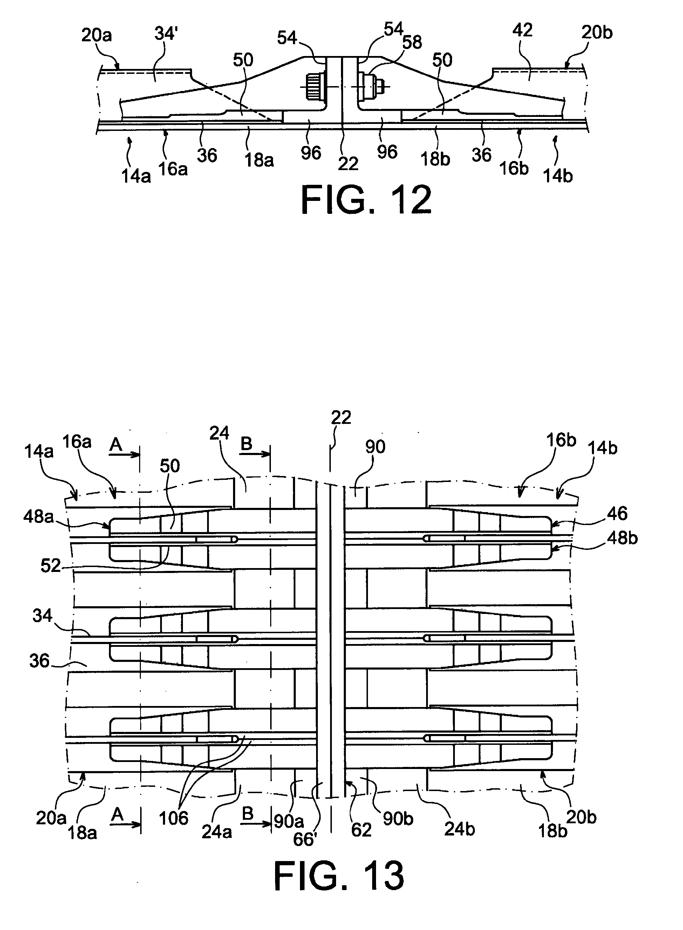

Les têtes d'appui 54 respectives des deux pièces d'éclisse 48a, 48b de chaque éclisse 46 sont par ailleurs serrées l'une à l'autre au moyen de trois boulons de liaison 58 (figures 10 et 12)

Des joints d'étanchéité peuvent en outre être prévus entre semelles 36 contigües de raidisseurs 20a, 20b consécutifs, et/ou entre les semelles 36 des raidisseurs et les semelles 50 des pièces d'éclisse 48a, 48b.

Il est à noter que dans l'exemple décrit sur les figures 10 à 12, il n'y a pas de cadre circonférentiel au niveau de la jonction 22 entre les tronçons de fuselage 14a et 14b. Il est cependant possible de prévoir un cadre circonférentiel au niveau de cette jonction, auquel cas les pièces d'éclisse 48a, 48b peuvent comporter un évidement analogue à celui des pièces d'éclisse du deuxième mode de réalisation des figures 6 à 9 décrit ci-dessus.

L'assemblage des tronçons de fuselage 14a et 14b, selon ce troisième mode de réalisation de l'invention, peut être mise en oeuvre d'une manière particulièrement simple, notamment en l'absence de cadre et de virole.

Ainsi, ce procédé peut consister à prévoir un nombre d'éclisses 46 égal au nombre de raidisseurs de l'un ou l'autre des tronçons de fuselage 14a et 14b, à fixer une première pièce d'éclisse 48a de chaque éclisse sur un raidisseur 20a correspondant d'un premier 14a des tronçons de fuselage, à préfixer éventuellement la seconde pièce d'éclisse 48b de chaque éclisse sur un raidisseur 20b correspondant du second tronçon de fuselage 14b, puis à positionner bout-à-bout les deux tronçons de fuselage en veillant à l'alignement des raidisseurs 20a du premier tronçon 14a avec les raidisseurs 20b du second tronçon 14b, et enfin à ajuster éventuellement la position des secondes pièces d'éclisse 48b précitées et à serrer mutuellement les têtes d'appui 54 respectives des deux pièces d'éclisse 48a, 48b de chaque éclisse 46 au moyen des trois boulons de liaison 58 de l'éclisse, et à fixer définitivement les secondes pièces d'éclisse 48b précitées.

Les figures 13 à 15 illustrent un quatrième mode de réalisation préféré de l'invention, dans lequel les raidisseurs 20a, 20b sont des raidisseurs à section en T du même type que ceux de la figure 2a décrits ci-dessus, et les éclisses 46 sont globalement semblables aux éclisses du premier mode de réalisation des figures 4 et 5 décrit ci-dessus.

Dans ce quatrième mode de réalisation, chaque couple de raidisseurs 20a, 20b alignés appartenant respectivement aux deux tronçons de fuselage 14a, 14b sont reliés l'un à l'autre par deux éclisses 46 disposées de chaque côté de l'âme 34 de chacun de ces raidisseurs.

Dans l'exemple représenté, le fuselage comporte un cadre circonférentiel 62 du type intégral à section en I. Ce cadre comporte ainsi un pied 90 en forme de semelle s'étendant de part et d'autre de l'âme du cadre depuis l'extrémité radialement interne de celle-ci, et une tête circonférentielle 66' s'étendant également de part et d'autre de l'âme du cadre, depuis l'extrémité radialement externe de celle-ci.

Dans cet exemple, le pied 90 du cadre 62 est fixé sur une virole 24 s'étendant longitudinalement au-delà du pied 90 de part et d'autre de la jonction 22 des deux tronçons de fuselage 14a, 14b, et destinée à solidariser les peaux 18a, 18b respectives des panneaux 16a, 16 constituant les deux tronçons de fuselage 14a, 14b, à l'instar de la virole 24 de la figure 4.

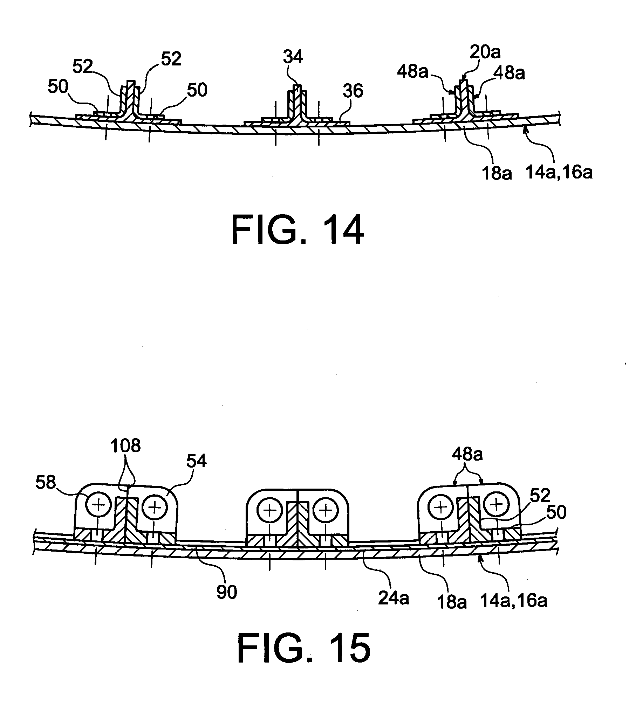

Chaque pièce d'éclisse 48a, 48b comporte dans la face de sa semelle 50 opposée à son âme 34 un évidement (non visible sur les figures 13 à 15) s'étendant depuis la tête d'appui 54 (figure 15) de la pièce d'éclisse, et délimitant un espace de réception du pied 90 du cadre 62 entre la virole 24 d'une part et la semelle 50 de la pièce d'éclisse 48a, 48b d'autre part. Cet évidement définit par exemple une marche sur la face précitée de la semelle 50.

La semelle 50 de chaque pièce d'éclisse 48a, 48b est fixée sur la semelle 36 d'un raidisseur 20a, 20b correspondant d'une manière analogue à ce qui a été décrit ci-dessus en référence au premier mode de réalisation de l'invention des figures 4 et 5.

Lorsque cela est nécessaire, des cales de rehaussement peuvent en outre être interposées entre la semelle 36 de chaque raidisseur 20a, 20b et la semelle 50 de la pièce d'éclisse 48a, 48b correspondante, comme dans le premier mode de réalisation de l'invention.

Par ailleurs, les deux pièces d'éclisses 48a, 48b de chaque éclisse 46 sont solidarisées l'une à l'autre par un écrou 58 d'une manière analogue à ce qui a été décrit ci-dessus en référence aux figures 4 et 5. Plus précisément, l'âme du cadre 62 est prise en sandwich entre les têtes d'appui 54 respectives des deux pièces d'éclisse 48a, 48b. Le serrage de l'ensemble ainsi formé est assuré par l'écrou 58 monté dans un orifice de la tête d'appui 54 de chacune des deux pièces d'éclisse 48a, 48b et passant au travers d'un orifice correspondant (non visible sur les figures 13 à 15) qui traverse l'âme du cadre 62.

De plus, les âmes 52 respectives des pièces d'éclisse 48a, 48b disposées de chaque côté de l'âme 34 d'un même raidisseur 20a, 20b sont fixées sur cette âme 34 du raidisseur, par exemple par boulonnage ou rivetage.

L'âme 52 de chacune de ces pièces d'éclisse 48a, 48b comporte en outre une partie d'extrémité 106 en surépaisseur s'étendant depuis la tête d'appui 54 de la pièce d'éclisse jusqu'à l'extrémité de l'âme 34 du raidisseur 20a, 20b sur lequel est fixée la pièce d'éclisse. Comme le montre la figure 13, les parties d'extrémité 106 en surépaisseur des âmes 52 respectives de ces pièces d'éclisse 48a, 48b sont appliquées l'une contre l'autre et fixées l'une à l'autre par des boulons, rivets, ou d'autres moyens de fixation adéquats.

D'une manière analogue, les têtes d'appui 54 respectives des pièces d'éclisse 48a, 48b précitées sont en contact par leurs flanc latéraux adjacents 108 (figure 15).

L'assemblage des deux tronçons de fuselage 14a et 14b peut être mis en oeuvre selon le procédé suivant.

Au préalable, un nombre d'éclisses 46 égal au double du nombre de raidisseurs longitudinaux 20a, 20b de l'un ou l'autre des tronçons de fuselage 14a, 14b est mis à disposition.

Une première partie circonférentielle 24a de la virole 24 est fixée sur la peau 18a du panneau 16a d'un premier 14a des tronçons de fuselage, par exemple par boulonnage, de sorte qu'une seconde partie circonférentielle 24b de cette virole 24 s'étende librement au-delà de ce tronçon 14a.

Un premier côté 90a du pied 90 du cadre 62 est fixé sur la première partie circonférentielle 24a de la virole 24, par exemple par boulonnage, de sorte qu'un second côté 90b de ce pied de cadre 90 s'étende sur la seconde partie circonférentielle 24b de cette virole 24.

Ensuite, pour chaque raidisseur 20a du premier tronçon de fuselage 14a, deux premières pièces d'éclisse 48a respectives de deux éclisses 46 sont fixées par leurs semelles 50 respectives sur la semelle 36 du raidisseur 20a, de part et d'autre de l'âme 34 de ce raidisseur, et sont fixées par leurs âmes 52 respectives sur l'âme 34 du raidisseur. De plus, ces deux premières pièces d'éclisse 48a sont fixées l'une à l'autre par leurs parties d'extrémité 106 respectives en surépaisseur.

Par ailleurs, les secondes pièces d'éclisse 48b de chaque éclisse 46 peuvent être préfixées d'une manière analogue sur le second tronçon de fuselage 14b, en parallèle aux opérations concernant le premier tronçon de fuselage 14a. Par préfixation, il faut comprendre, comme expliqué ci-dessus, que chaque seconde pièce d'éclisse 48b est alors fixée de manière provisoire au raidisseur 20b correspondant par des moyens de fixation, tels que des boulons, sans serrage complet de ces derniers, de manière à conserver une mobilité et un jeu entre la seconde pièce d'éclisse et le raidisseur. En variante, cette préfixation peut être opérée par des moyens de fixation provisoires tels que des épingles.

Le procédé comprend ensuite l'assemblage proprement dit des tronçons de fuselage 14a et 14b, dans lequel on positionne ces deux tronçons de fuselage bout-à-bout en veillant à :
- l'alignement entre les raidisseurs 20a du premier tronçon 14a et les raidisseurs 20b du second tronçon 14b ;
- l'emmanchement de la seconde partie 24b de la virole 24 dans le second tronçon de fuselage 14b entre la peau 18b de chaque panneau 16b constituant ledit tronçon de fuselage 14b et la semelle 50 de chaque seconde pièce d'éclisse 48b préfixée sur ce tronçon de fuselage 14b ;
- l'emmanchement du second côté 90b du pied de cadre 90 dans les espaces de réception définis entre les semelles 36 des raidisseurs 20b de ce second tronçon de fuselage 14b et les pièces d'éclisses 48b précitées.

Le second côté 90b du pied de cadre 90 peut alors, le cas échéant, être fixé conjointement sur la seconde partie 24b de la virole 24 et sur la peau 18b de chaque panneau 16b du second tronçon de fuselage 14b, par exemple par boulonnage.

La seconde pièce d'éclisse 48b de chaque éclisse 46 peut, si nécessaire, être déplacée relativement à la semelle de raidisseur 36 correspondante du second tronçon de fuselage 14b de manière à obtenir un alignement satisfaisant de l'orifice de passage d'écrou formé dans la tête d'appui 54 de cette seconde pièce d'éclisse 48b avec l'orifice correspondant de la première pièce d'éclisse 48a de cette éclisse 46 et de l'orifice correspondant de l'âme du cadre 62 interposée entre ces deux pièces d'éclisse 48a, 48b.

Le boulon de liaison 58 de chacune des éclisses 46 peut alors être monté dans les orifices respectifs des têtes d'appui 54 en passant au travers de l'orifice correspondant de l'âme du cadre 62, de manière à serrer les deux pièces d'éclisse 48a, 48b de chaque éclisse 46 conjointement avec le cadre 62.

La fixation définitive de chaque pièce d'éclisse 48b sur le raidisseur 20b correspondant du second tronçon 14b et sur le second côté 90b du pied de cadre 90 peut également être opérée à ce stade. En fonction des étapes précédentes, cette fixation définitive peut consister en un serrage complet de moyens de fixation partiellement serrés au préalable, ou en un remplacement de moyens de fixation provisoires, tels que des épingles, par des moyens de fixation définitifs, tels que des boulons.

D'une manière générale, il faut comprendre que des caractéristiques des quatre modes de réalisation décrits ci-dessus peuvent être combinées pour aboutir à d'autres modes de réalisation sans sortir du cadre de la présente invention.

Par exemple, les éclisses 46 du deuxième mode de réalisation (figures 6 et 7) peuvent être utilisées au niveau d'une jonction de tronçons de fuselage dépourvue de cadre circonférentiel, comme dans le troisième mode de réalisation décrit ci-dessus, auquel cas l'évidement 95 de chaque pièce d'éclisse n'est plus utile et peut donc être omis.

De plus, les éclisses 46 du premier mode de réalisation (figures 4 et 5) peuvent comporter des âmes 52 libres, c'est-à-dire non fixées sur les âmes des raidisseurs longitudinaux, lorsque cela présente un intérêt.

Par ailleurs, un cadre du type utilisé dans le premier mode de réalisation décrit ci-dessus peut éventuellement être utilisé avec les éclisses du deuxième ou du troisième mode de réalisation moyennant une adaptation de la configuration de ces éclisses.

De même, un cadre du type utilisé dans le deuxième mode de réalisation décrit ci-dessus peut éventuellement être utilisé avec les éclisses du premier ou du troisième mode de réalisation, moyennant là encore une adaptation de la configuration de ces éclisses.

Il est à noter que d'une manière générale, dans tous ces modes de réalisation de l'invention, les boulons de liaison 58 permettent la reprise d'efforts de traction s'exerçant de l'un des tronçons de fuselage 14a, 14b sur l'autre tronçon, tandis que les têtes d'appui 54 des pièces d'éclisse 48a, 48b de chaque éclisse 46 permettent la reprise des efforts de compression s'exerçant entre ces tronçons de fuselage.

## Revendications

1. Dispositif (46) d'assemblage de deux tronçons de fuselage (14a, 14b) d'aéronef comprenant chacun une peau (18a, 18b) ainsi que des raidisseurs longitudinaux (20a, 20b) apposés sur ladite peau, ledit dispositif comprenant au moins une éclisse (46) destinée à l'éclissage de deux raidisseurs longitudinaux (20a, 20b) sensiblement alignés l'un par rapport à l'autre et appartenant respectivement auxdits tronçons de fuselage (14a, 14b), ladite éclisse (46) comprenant deux pièces d'éclisse (48a, 48b) comportant chacune au moins une semelle longitudinale (50) destinée à être fixée sur un raidisseur correspondant (20a, 20b) ainsi qu'une tête d'appui transversale (54), ladite éclisse (46) comprenant en outre au moins un organe de liaison démontable (58) apte à serrer mutuellement les têtes d'appui (54) respectives desdites pièces d'éclisse (48a, 48b) ledit dispositif **caractérisé en ce que** ledit organe de liaison démontable (58) permet une transmission d'efforts longitudinaux en traction et en compression entre lesdites pièces d'éclisse.

2. Ensemble comprenant deux tronçons de fuselage d'aéronef (14a, 14b) assemblés bout-à-bout longitudinalement et dont chacun comprend une peau (18a, 18b) ainsi que des raidisseurs longitudinaux (20a, 20b) fixés sur ladite peau et répartis autour d'un axe longitudinal dudit tronçon (14a, 14b), lesdits raidisseurs longitudinaux (20a, 20b) étant agencés de sorte que chaque raidisseur longitudinal (20a) de l'un desdits tronçons (14a) soit sensiblement aligné avec un raidisseur longitudinal correspondant (20b) de l'autre tronçon (14b), ledit ensemble comprenant en outre au moins un dispositif d'assemblage selon la revendication 1, dont les têtes d'appui transversales (54) respectives desdites pièces d'éclisse (48a, 48b) de chaque éclisse (46) sont serrées l'une à l'autre par chaque organe de liaison démontable (58) de l'éclisse (46) de manière à permettre une transmission d'efforts longitudinaux en traction et en compression entre lesdites pièces d'éclisse, et dont les semelles longitudinales respectives (50) desdites pièces d'éclisse (48a, 48b) de chaque éclisse (46) sont fixées respectivement sur deux raidisseurs longitudinaux correspondants (20, 20b) sensiblement alignés l'un avec l'autre et faisant respectivement partie desdits tronçons de fuselage (14a, 14b).

3. Ensemble selon la revendication 2, dans lequel au moins un élément (70, 64) d'un cadre circonférentiel (62) est interposé entre les têtes d'appui transversales respectives (54) desdites pièces d'éclisse (48a, 48b) de chaque éclisse (46) dudit dispositif d'assemblage.

4. Ensemble selon la revendication 3, dans lequel ledit élément de cadre (70, 64) comporte un pied (72, 90, 90a, 90b) interposé entre une partie au moins de chaque semelle (50) de l'une au moins desdites pièces d'éclisse (48a, 48b) de chaque éclisse (46) et la peau (18a, 18b) du tronçon de fuselage correspondant (14a, 14b).

5. Ensemble selon l'une quelconque des revendications 2 à 4, comprenant en outre une virole circonférentielle (24) fixée sur lesdites peaux respectives (18a, 18b) desdits tronçons de fuselage (14a, 14b), et sur laquelle est fixée une partie de chaque semelle (50) de chaque pièce d'éclisse (48a, 48b) de chaque éclisse (46) dudit dispositif d'assemblage.

6. Ensemble selon l'une quelconque des revendications 2 à 5, dans lequel chaque semelle longitudinale (50) de chaque pièce d'éclisse (48a, 48b) est, au moins en partie, fixée sur une semelle (36) d'au moins un raidisseur longitudinal (20a, 20b) correspondant.

7. Ensemble selon la revendication 6, dans lequel chacune desdites pièces d'éclisse (48a, 48b) comprend en outre une âme (52) fixée sur une âme (34') d'un raidisseur longitudinal (20a, 20b) correspondant.

8. Ensemble selon la revendication 6 ou 7, dans lequel chaque pièce d'éclisse (48a, 48b) de chaque éclisse (46) comprend une unique semelle (50) qui recouvre deux semelles respectives (36) contigües de deux raidisseurs (20a, 20b) circonférentiellement consécutifs du tronçon de fuselage (14a, 14b) correspondant.

9. Ensemble selon la revendication 6 ou 7, dans lequel, chacun desdits raidisseurs (20a, 20b) comportant deux semelles (36) écartées circonférentiellement l'une de l'autre et raccordées par un corps du raidisseur (34', 42), chaque pièce d'éclisse (48a, 48b) de chaque éclisse (46) comporte deux semelles (50) qui sont respectivement fixées sur lesdites deux semelles (36) d'un raidisseur correspondant (20a, 20b) et qui sont raccordées l'une à l'autre par ladite tête d'appui transversale (54) de la pièce d'éclisse (48a, 48b).

10. Ensemble selon l'une quelconque des revendications 2 à 9, dans lequel chacun desdits raidisseurs longitudinaux (20a, 20b) présente, en section transversale, une structure en oméga.

11. Fuselage d'aéronef, **caractérisé en ce qu'**il comprend au moins un ensemble selon l'une quelconque des revendications 2 à 10.

12. Aéronef, **caractérisé en ce qu'**il comprend un fuselage selon la revendication précédente.

13. Procédé d'assemblage de deux tronçons de fuselage d'aéronef (14a, 14b), dont chacun comprend une peau (18a, 18b) ainsi que des raidisseurs longitudinaux (20a, 20b) fixés sur ladite peau et répartis autour d'un axe longitudinal dudit tronçon, au moyen d'au moins un dispositif d'assemblage selon la revendication 1, en particulier pour obtenir un ensemble selon l'une quelconque des revendications 2 à 10, ledit procédé comprenant au moins des étapes de :
- positionnement bout-à-bout, selon la direction longitudinale, des peaux (18a, 18b) respectives desdits tronçons de fuselage ;
- fixation d'une première pièce d'éclisse (48a) de chaque éclisse (46) dudit dispositif d'assemblage sur un raidisseur (20a) correspondant d'un premier desdits tronçons de fuselage (14a) ;
- fixation de la seconde pièce d'éclisse (48b) de chaque éclisse (46) dudit dispositif d'assemblage sur un raidisseur (20b) correspondant du second desdits tronçons de fuselage (14b) ;
- et, postérieurement aux trois étapes ci-dessus, serrage mutuel des têtes d'appui transversales (54) desdites pièces d'éclisse (48a, 48b) de chaque éclisse (46) dudit dispositif d'assemblage au moyen de chaque organe de liaison démontable (58) de l'éclisse (46) de manière à permettre une transmission d'efforts longitudinaux en traction et en compression entre lesdites pièces d'éclisse.

14. Procédé selon la revendication 13, dans lequel ladite étape de fixation de la première pièce d'éclisse (48a) de chaque éclisse (46) est mise en oeuvre avant ladite étape de positionnement bout-à-bout des peaux (18a, 18b) des tronçons de fuselage (14a, 14b).

15. Procédé selon la revendication 14, comprenant en outre une étape de fixation provisoire de la seconde pièce d'éclisse (48b) de chaque éclisse (46) dudit dispositif d'assemblage sur ledit raidisseur (20b) correspondant du second desdits tronçons de fuselage (14b), mise en oeuvre avant ladite étape de positionnement bout-à-bout des peaux (18a, 18b) des tronçons de fuselage (14a, 14b).

## Patentansprüche

1. Vorrichtung (46) zum Zusammenbau von zwei Rumpfabschnitten (14a, 14b) eines Luftfahrzeugs, die jeweils eine Außenhaut (18a, 18b) sowie an der Außenhaut angebrachte Längsversteifungen (20a, 20b) aufweisen, wobei die Vorrichtung mindestens eine Lasche (46) aufweist, die zur Laschenverbindung von zwei Längsversteifungen (20a, 20b), die in Bezug aufeinander im Wesentlichen in einer Linie ausgerichtet sind und jeweils zu den Rumpfabschnitten (14a, 14b) gehören, bestimmt ist, wobei die Lasche (46) zwei Laschenteile (48a, 48b) umfasst, die jeweils mindestens eine an einer entsprechenden Versteifung (20a, 20b) zu befestigende Längsauflageplatte (50) sowie ein querliegendes Auflageende (54) aufweisen, wobei die Lasche (46) ferner mindestens ein demontierbares Verbindungsorgan (58) aufweist, das die jeweiligen Auflageenden (54) der Laschenteile (48a, 48b) gegenseitig aneinanderpressen kann, wobei die Vorrichtung **dadurch gekennzeichnet ist, dass** das demontierbare Verbindungsorgan (58) eine Übertragung von Zug- und Drucklängskräften zwischen den Laschenteilen ermöglicht.

2. Anordnung, die zwei Rumpfabschnitte eines Luftfahrzeugs (14a, 14b) umfasst, die in der Längsrichtung aneinanderstoßend angeordnet sind und von denen jeder eine Außenhaut (18a, 18b) sowie Längsversteifungen (20a, 20b), die an der Außenhaut befestigt sind und um eine Längsachse des Abschnitts (14a, 14b) verteilt sind, umfasst, wobei die Längsversteifungen (20a, 20b) derart angeordnet sind, dass jede Längsversteifung (20a) von einem der Abschnitte (14a) mit einer entsprechenden Längsversteifung (20b) des anderen Abschnitts (14b) im Wesentlichen in einer Linie ausgerichtet ist, wobei die Anordnung ferner mindestens eine Vorrichtung zum Zusammenbau nach Anspruch 1 aufweist, deren jeweilige querliegende Auflageenden (54) der Laschenteile (48a, 48b) von jeder Lasche (46) durch jedes demontierbare Verbindungsorgan (58) der Lasche (46) derart aneinandergepresst werden, dass eine Übertragung von Zug- und Drucklängskräften zwischen den Laschenteilen möglich ist, und deren jeweilige Längsauflageplatten (50) der Laschenteile (48a, 48b) jeder Lasche (46) jeweils an zwei entsprechenden Längsversteifungen (20, 20b) befestigt sind, die miteinander im Wesentlichen in einer Linie angeordnet sind und jeweils einen Teil der Rumpfabschnitte (14a, 14b) bilden.

3. Anordnung nach Anspruch 2, wobei mindestens ein Element (70, 64) einer umlaufenden Rahmenstruktur (62) zwischen die jeweiligen querliegenden Auflageenden (54) der Laschenteile (48a, 48b) jeder Lasche (46) der Vorrichtung zum Zusammenbau eingefügt ist.

4. Anordnung nach Anspruch 3, wobei das Rahmenstrukturelement (70, 64) einen Fuß (72, 90, 90a, 90b) aufweist, der zwischen einen Teil von mindestens jeder Auflageplatte (50) von mindestens einem der Laschenteile (48a, 48b) jeder Lasche (46) und die Außenhaut (18a, 18b) des entsprechenden Rumpfabschnitts (14a, 14b) eingefügt ist.

5. Anordnung nach einem der Ansprüche 2 bis 4, die ferner einen umlaufenden Reif (24) aufweist, der an der jeweiligen Außenhaut (18a, 18b) der Rumpfabschnitte (14a, 14b) befestigt ist und an dem ein Teil jeder Auflageplatte (50) von jedem Laschenteil (48a, 48b) jeder Lasche (46) der Vorrichtung zum Zusammenbau befestigt ist.

6. Anordnung nach einem der Ansprüche 2 bis 5, wobei jede Längsauflageplatte (50) von jedem Laschenteil (48a, 48b) mindestens teilweise an einer Auflageplatte (36) von mindestens einer entsprechenden Längsversteifung (20a, 20b) befestigt ist.

7. Anordnung nach Anspruch 6, wobei jedes der Laschenteile (48a, 48b) ferner einen Steg (52) aufweist, der an einem Steg (34') einer entsprechenden Längsversteifung (20a, 20b) befestigt ist.

8. Anordnung nach Anspruch 6 oder 7, wobei jedes Laschenteil (48a, 48b) jeder Lasche (46) eine einzige Auflageplatte (50) aufweist, die zwei jeweils benachbarte Auflageplatten (36) von zwei Versteifungen (20a, 20b), die in Umlaufrichtung des entsprechenden Rumpfabschnitts (14a, 14b) aufeinanderfolgen, bedeckt.

9. Anordnung nach Anspruch 6 oder 7, wobei jede der Versteifungen (20a, 20b) zwei Auflageplatten (36) aufweist, die in Umlaufrichtung voneinander beabstandet sind und durch einen Versteifungskörper (34', 42) verbunden sind, jedes Laschenteil (48a, 48b) jeder Lasche (46) zwei Auflageplatten (50) aufweist, die jeweils an den zwei Auflageplatten (36) einer entsprechenden Versteifung (20a, 20b) befestigt sind und durch das querliegende Auflageende (54) des Laschenteils (48a, 48b) miteinander verbunden sind.

10. Anordnung nach einem der Ansprüche 2 bis 9, wobei jede der Längsversteifungen (20a, 20b) im Querschnitt eine Omega-Struktur zeigt.

11. Luftfahrzeugrumpf, **dadurch gekennzeichnet, dass** er mindestens eine Anordnung nach einem der Ansprüche 2 bis 10 aufweist.

12. Luftfahrzeug, **dadurch gekennzeichnet, dass** es einen Rumpf nach dem vorhergehenden Anspruch aufweist.

13. Verfahren zum Zusammenbau von zwei Rumpfabschnitten eines Luftfahrzeugs (14a, 14b), von denen jeder eine Außenhaut (18a, 18b) sowie Längsversteifungen (20a, 20b), die an der Außenhaut befestigt und um eine Längsachse des Rumpfs verteilt sind, aufweist, mit Hilfe von mindestens einer Vorrichtung zum Zusammenbau nach Anspruch 1, um insbesondere eine Anordnung nach einem der Ansprüche 2 bis 10 zu erhalten, wobei das Verfahren mindestens die folgenden Schritte aufweist:
- Positionieren der jeweiligen Außenhäute (18a, 18b) der Rumpfabschnitte aneinanderstoßend in der Längsrichtung,
- Befestigen von einem ersten Laschenteil (48a) jeder Lasche (46) der Vorrichtung zum Zusammenbau an einer Versteifung (20a), die einem ersten der Rumpfabschnitte (14a) entspricht,
- Befestigen des zweiten Laschenteils (48b) jeder Lasche (46) der Vorrichtung zum Zusammenbau an einer Versteifung (20b), die dem zweiten der Rumpfabschnitte (14b) entspricht,
- und nachfolgend zu den obigen drei Schritten gegenseitiges Aneinanderpressen der querliegenden Auflageenden (54) der Laschenteile (48a, 48b) jeder Lasche (46) der Vorrichtung zum Zusammenbau mit Hilfe von jedem demontierbaren Verbindungsorgan (58) der Lasche (46) derart, dass eine Übertragung von Zug- und Drucklängskräften zwischen den Laschenteilen möglich ist.

14. Verfahren nach Anspruch 13, wobei der Schritt des Befestigens des ersten Laschenteils (48a) jeder Lasche (46) vor dem Schritt des Positionierens der Außenhäute (18a, 18b) der Rumpfabschnitte (14a, 14b) aneinanderstoßend durchgeführt wird.

15. Verfahren nach Anspruch 14, umfassend ferner einen Schritt des provisorischen Befestigens des zweiten Laschenteils (48b) jeder Lasche (46) der Vorrichtung zum Zusammenbau an der entsprechenden Versteifung (20b) des zweiten der Rumpfabschnitte (14b), der vor dem Schritt des Positionierens der Außenhäute (18a, 18b) der Rumpfabschnitte (14a, 14b) aneinanderstoßend durchgeführt wird.

## Claims

1. Assembly device for assembling two aircraft fuselage sections (14a, 14b) each comprising a skin (18a, 18b) as well as longitudinal stiffeners (20a, 20b) placed on said skin, said device comprising at least one fishplate (46) intended for fishplating two longitudinal stiffeners (20a, 20b) substantially aligned with respect to each other and belonging respectively to said fuselage sections (14a, 14b), said fishplate (46) comprising two fishplate pieces (48a, 48b) each comprising at least one longitudinal sole plate (50) intended to be fixed to a corresponding longitudinal stiffener (20a, 20b), and a transverse support head (54), said fishplate (46) also comprising at least one demountable connecting member (58) able to mutually clamp the respective support heads (54) of said fishplate pieces (48a, 48b), said assembly device being **characterised in that** said demountable connecting member (58) allows a transmission of longitudinal traction and compression forces between said fishplate pieces.

2. Assembly comprising two aircraft fuselage sections (14a, 14b) assembled end to end longitudinally and each of which comprises a skin (18a, 18b) as well as longitudinal stiffeners (20a, 20b) fixed to said skin and distributed around a longitudinal axis of said section (14a, 14b), said longitudinal stiffeners (20a, 20b) being arranged so that each longitudinal stiffener (20a) of one of the sections (14a) is substantially aligned with a corresponding longitudinal stiffener (20b) of the other section (14b), said assembly also comprising at least one assembly device according to claim 1, wherein the respective transverse support heads (54) of said fishplate pieces of each fishplate (46) are clamped to each other by each demountable connecting member (58) of the fishplate (46) so as to allow transmission of longitudinal traction and compression forces between said fishplate pieces, and wherein the respective longitudinal sole plates (50) of said fishplate pieces (48a, 48b) of each fishplate (46) are fixed respectively to two corresponding longitudinal stiffeners (20a, 20b) substantially aligned with each other and respectively forming part of said fuselage sections (14a, 14b).

3. Assembly according to claim 2, in which at least one element (70, 64) of a circumferential frame (62) is interposed between the respective transverse support heads (54) of said fishplate pieces (48a, 48b) of each fishplate (46) of said assembly device.

4. Assembly according to claim 3, in which said element (70, 64) of the circumferential frame comprises a foot (72, 90, 90a, 90b) interposed between at least a part of each sole plate (50) of at least one of said fishplate pieces (48a, 48b) of each fishplate (46) and the skin (18a, 18b) of the corresponding fuselage section (14a, 14b).

5. Assembly according to any one of claims 2 to 4, also comprising a circumferential splice (24) fixed to said respective skins (18a, 18b) of said fuselage sections (14a, 14b), and to which a part of each sole plate (50) of each fishplate piece (48a, 48b) of each fishplate (46) of said assembly device is fixed.

6. Assembly according to any one of claims 2 to 5, in which each longitudinal sole plate (50) of each fishplate piece (48a, 48b) is, at least partly, fixed to a sole plate (36) of at least one corresponding longitudinal stiffener (20a, 20b).

7. Assembly according to claim 6, in which each of said fishplate pieces (48a, 48b) also comprises a web (52) fixed to a web (34') of a corresponding longitudinal stiffener (20a, 20b).

8. Assembly according to one of claims 6 or 7, in which each fishplate piece (48a, 48b) of each fishplate (46) comprises a single sole plate (50) that covers two respective contiguous sole plates (36) of two circumferentially consecutive longitudinal stiffeners (20a, 20b) of the corresponding fuselage section (14a, 14b).

9. Assembly according to claim 6 or 7, in which:
- each of said longitudinal stiffeners (20a, 20b) comprises two sole plates (36) separated circumferentially from each other and mutually connected by a body of the longitudinal stiffener (34', 42), and
- each fishplate piece (48a, 48b) of each fishplate (46) comprises two sole plates (50) that are respectively fixed to said two sole plates (36) of a corresponding longitudinal stiffener (20a, 20b) and which are connected to each other by said transverse support head (54) of the fishplate piece (48a, 48b).

10. Assembly according to any one of claims 2 to 9, in which each of said longitudinal stiffeners (20a, 20b) has, in transverse section, an omega-shaped structure.

11. Aircraft fuselage, **characterised in that** it comprises at least one assembly according to any one of claims 2 to 10.

12. Aircraft, **characterised in that** it comprises a fuselage according to the preceding claim.

13. Method of assembling two aircraft fuselage sections (14a, 14b), each of which comprises a skin (18a, 18b) as well as longitudinal stiffeners (20a, 20b) fixed to said skin and distributed around a longitudinal axis of said fuselage section, by means of at least one assembly device according to claim 1, in particular in order to obtain a set of fuselage sections according to any one of claims 2 to 10, said method comprising at least steps of:
- end-to-end positioning, in the longitudinal direction, of the respective skins (18a, 18b) of said fuselage sections;
- fixing a first fishplate piece (48a) of each fishplate (46) of said assembly device to a corresponding longitudinal stiffener (20a) of a first one of said fuselage sections (14a);
- fixing the second fishplate piece (48b) of each fishplate (46) of said assembly device to a corresponding longitudinal stiffener (20b) of the second of said fuselage sections (14b);
- and, subsequently to the above three steps, mutual clamping of the respective transverse support heads (54) of said fishplate pieces (48a, 48b) of each fishplate (46) of said assembly device by means of each demountable connecting member (58) of the fishplate (46) so as to allow transmission of longitudinal traction and compression forces between said fishplate pieces.

14. Method according to claim 13, in which said step of fixing the first fishplate piece (48a) of each fishplate (46) is implemented before said step of end-to-end positioning of the skins (18a, 18b) of the fuselage sections (14a, 14b).

15. Method according to claim 14, also comprising a step of temporary fixing of the second fishplate piece (48b) of each fishplate (46) of said assembly device on said corresponding longitudinal stiffener (20b) of the second of said fuselage sections (14b), implemented before said step of end-to-end positioning of the skins (18a, 18b) of the fuselage sections (14a, 14b).
